(19) **Europäisches Patentamt**
**European Patent Office**
**Office européen des brevets**

(11) **EP 1 600 366 B1**

(12) **EUROPEAN PATENT SPECIFICATION**

(45) Date of publication and mention
of the grant of the patent:
**15.06.2011 Bulletin 2011/24**

(51) Int Cl.:
***B62J 6/00*** (2006.01)

(21) Application number: **05009242.8**

(22) Date of filing: **27.04.2005**

(54) **Bicycle lamp protection apparatus**

Schutzvorrichtung eines Fahrradlichtes

Dispositif de protection de lampe de bicyclette

(84) Designated Contracting States:
**AT BE BG CH CY CZ DE DK EE ES FI FR GB GR HU IE IS IT LI LT LU MC NL PL PT RO SE SI SK TR**

(30) Priority: **26.05.2004 JP 2004156099**
**11.11.2004 JP 2004327998**

(43) Date of publication of application:
**30.11.2005 Bulletin 2005/48**

(73) Proprietor: **SHIMANO INC.**
**Osaka 590-8577 (JP)**

(72) Inventors:
• **Kitamura, Satoshi**
**Kitakatsuragigun**
**Nara, 636-0013 (JP)**

• **Ichida, Tadashi**
**Nara (JP)**

(74) Representative: **GROSSE SCHUMACHER KNAUER VON HIRSCHHAUSEN**
**Patent- und Rechtsanwälte**
**Nymphenburger Strasse 14**
**80335 München (DE)**

(56) References cited:
**EP-A- 0 460 585**  **DE-A1- 3 145 908**
**DE-A1- 3 347 495**  **US-A1- 2003 141 918**

**Description**

BACKGROUND OF THE INVENTION

Field of the Invention

The present invention generally relates to a bicycle lamp protection apparatus according to the preamble of claim 1. More particularly, the present invention relates to a bicycle lamp protection apparatus for bicycle lamps that are illuminated by power from a dynamo mounted to the bicycle and for protecting such bicycle lamps from overvoltage.

Background Information

A headlight and taillight are commonly mounted to a bicycle as illumination devices. In the conventional art, the headlight and taillight are often illuminated by electric power supplied by a dynamo. The voltage generated by the dynamo generally increases in proportion to the speed of the bicycle (i.e., the wheel rotation speed). At high speeds, and when the illumination devices are extinguished, the voltage generated between the dynamo terminals can exceed 100V. Therefore, where an illumination device is illuminated by voltage generated by a dynamo, the illumination device must be designed to endure such a high voltage. However, adding components that can endure a high voltage decreases the versatility of the overall construction and increases the cost of the device.

Accordingly, in order to utilize a general-use electric bulb and protect the electric bulb from extremely high voltage, a lamp protection apparatus comprising a circuit that clamps the voltage is required. The use of a lamp protection apparatus having a current modulator, conventional overvoltage protection circuit or the like is known in the art as a method to prevent the occurrence of burnout of the headlight due to overvoltage from the dynamo (See, e.g., Dealer Sales Manual, published by Shimano Bicycle Components in September 1996). For instance, such a voltage clamping circuit for use with bicycle dynamos is known from the US 200310141918 A1 disclosing the features of the preamble of claim 1. This conventional lamp protection apparatus is disposed in a switch unit connected to a hub dynamo. The switch unit ensures that when a taillight is connected in parallel with the headlight and is illuminated by the electric power from the hub dynamo, even if the headlight burns out, the voltage supplied to the taillight does not rise above a prescribed level. Thus, deterioration in the useful life of the electric bulb used in the taillight can be prevented.

In a commonly used overvoltage protection circuit, a bidirectional voltage clamp circuit has two Zener diodes connected in parallel with the dynamo. In the bidirectional voltage clamp circuit, one diode is connected to the positive side of the dynamo and functions as a basic Zener diode to maintain or hold the voltage at or below a prescribed level, while the negative-side diode functions as a rectifier diode.

Because the conventional lamp protection apparatus is disposed inside a small switch unit, it is difficult to dissipate heat buildup inside the switch unit. As a result, when both the headlight and the taillight burn out, the electric power becomes concentrated in the lamp protection apparatus causing the internal temperature to rise and damaging the current modulator or the overvoltage protection circuit.

In view of the above, it will be apparent to those skilled in the art from this disclosure that there exists a need for an improved bicycle lamp protection apparatus that protects bicycle lamps from overvoltage. This invention addresses this need in the art as well as other needs, which will become apparent to those skilled in the art from this disclosure.

SUMMARY OF THE INVENTION

An object of the present invention is to prevent damage from excessive heat to the internal circuits of a lamp protection apparatus

A further object of the present invention is to prevent damage due to heat buildup to the overvoltage protection circuit.

The foregoing objects can basically be obtained by providing a bicycle lamp protection apparatus having a casing and an overvoltage protection circuit. The casing has a mounting part that can be mounted to the bicycle. The overvoltage protection circuit is housed in the casing and prevents overvoltage from being supplied to the bicycle lamps.

The casing has plurality of cooling fins that protrude from a surface of the casing. The casing comprises a case main unit and a cooling fin unit. The cooling fin unit has cooling fins arranged on an outside surface of the cooling fin unit. The case main unit is secured to the cooling fin unit. In this case, the cooling capacity is increased because the cooling fins increase the surface area from which heat is emitted. As a result, the overvoltage protection circuit can be better protected from damage caused by heat.

The overvoltage protection circuit is housed inside a casing rather than in a switch unit. Damage caused to the overvoltage protection circuit by internal heat can be prevented by forming the casing using a configuration and materials that are effective in promoting heat dissipation.

The cooling fin unit is U-shaped and has a plate-like front section and plate-like mounting parts defining a bicycle mounting part. Moreover, the cooling fin unit has a pair of side sections. The side sections extend toward the plate-like mounting parts. The overvoltage protection circuits is disposed in the space enclosed by the front section and a pair of side sections and the mounting parts are formed Integrally with the side sections.

The bicycle lamp protection apparatus according to a second aspect of the present invention is the bicycle lamp protection apparatus according to the first aspect, wherein the case main unit is configured to hook onto the cooling fin unit.

The bicycle lamp protection apparatus according to a third aspect of the present invention is the bicycle lamp protection apparatus according to the first or second aspect, wherein the bicycle lamps include a headlight as well as a taillight that is illuminated by the electric power from the dynamo. The mounting part of the casing can be mounted to the bicycle together with the taillight, thereby making it is easy to mount the casing.

The bicycle lamp protection apparatus according to a fourth aspect of the present invention is the bicycle lamp protection apparatus according to the third aspect, wherein the taillight is electrically connected to the dynamo in parallel with the headlight. In this case, even if the headlight or the taillight burns out, the other lamp can be kept illuminated.

The bicycle lamp protection apparatus according to a fifth aspect of the present invention is the bicycle lamp protection apparatus according to the forth aspect, wherein the overvoltage protection circuit is disposed between the headlight and taillight, which are electrically connected to the dynamo. In this case, because the overvoltage protection circuit is disposed between the headlight and taillight, it is easy to mount the overvoltage protection circuit together with the taillight. Furthermore, because the overvoltage protection circuit does not impose a load when the headlight and taillight are extinguished, the problem of heavy dynamo rotation when the lamps are extinguished can be eliminated.

The bicycle lamp protection apparatus according to a sixth aspect of the present invention is the bicycle lamp protection apparatus according to f the first or second aspects, wherein the mounting part can be mounted to an existing component attaching part on the bicycle. In this case, because the mounting part can be mounted to an existing component attaching part, a new component attaching part is not needed in order to mount the casing to the bicycle.

The bicycle lamp protection apparatus according to a seventh aspect of the present invention is the bicycle lamp protection apparatus according to the first or second aspects, wherein the mounting part can be mounted to an existing component attaching part having holes used for mounting. In this case, the casing can be easily mounted to the bicycle by attaching screw members or the like to the holes.

The bicycle lamp protection apparatus according to a eight aspect of the present invention is the bicycle lamp protection apparatus according to the first or second aspects, wherein the mounting part can be mounted to a component attaching part having a pair of screw holes disposed on the bicycle frame to enable mounting of a bottle mounting member. In this case, the casing can be easily mounted to screw holes called nibs that are disposed on the bicycle frame.

The bicycle lamp protection apparatus according to an ninth aspect of the present invention is the bicycle lamp protection apparatus according to the third aspect, wherein the overvoltage protection circuit has a first terminal that connects to the headlight, a second terminal that connects to the taillight, and a diode used for overvoltage protection. The diode is disposed between the terminals and electrically connected to both of them. In this case, the voltage can be easily clamped to a fixed minimum voltage by the diode.

The bicycle lamp protection apparatus according to another of the present invention is the bicycle lamp protection apparatus, further provided with a wire for connecting to the second terminal and connecting to the tail lamp. In this case, the wiring work is simplified because the taillight and the bicycle lamp protection apparatus can be connected together directly.

According to the present invention, because the overvoltage protection circuit is housed inside a dedicated casing or housing rather than in a switch unit, damage to the overvoltage protection circuit due to heat can be prevented by forming the casing using a configuration and materials that are effective in promoting heat dissipation.

These and other objects, features, aspects and advantages of the present invention will become apparent to those skilled in the art from the following detailed description, which, taken in conjunction with the annexed drawings, discloses preferred embodiments of the present invention.

BRIEF DESCRIPTION OF THE DRAWINGS

Referring now to the attached drawings which form a part of this original disclosure:

Figure 1 is a side elevational view of a bicycle, which incorporates a bicycle lamp protection apparatus in accordance with a first embodiment of the present invention;

Figure 2 is a partial perspective view of the rack area portion of the bicycle illustrated in Figure 1 in accordance with the first embodiment of the present invention;

Figure 3 is a partial side cross-sectional view of a taillight and a lamp protection apparatus mounted on the bicycle illustrated in Figure 1 in accordance with the first embodiment of the present invention;

Figure 4 is a block diagram of an illumination system for the bicycle lamp protection apparatus in accordance with the first embodiment of the present invention;

Figure 5 is a side elevational view of a bicycle, which incorporates a bicycle lamp protection apparatus in accordance with a second embodiment;

Figure 6 is an enlarged partial side elevational view of the bicycle lamp protection apparatus in accordance with the second embodiment illustrated in Figure 5;

Figure 7 is a partial side cross-sectional view, similar to Figure 3, of a taillight and a lamp protection apparatus to be mounted on the bicycle illustrated in Figure 1 in accordance with a third embodiment of the present invention;

Figure 8 is a frontal view of a lamp protection apparatus in accordance with the third embodiment;

Figure 9 is a top plan view of the lamp protection apparatus in accordance with the third embodiment;

Figure 10 is a bottom plan view of the lamp protection apparatus in accordance with the third embodiment;

Figure 11 is a cross sectional view taken along section line X-X of Figure 8; and

Figure 12 is an exploded view of the case main unit for the lamp protection apparatus in accordance with the third embodiment.

## DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

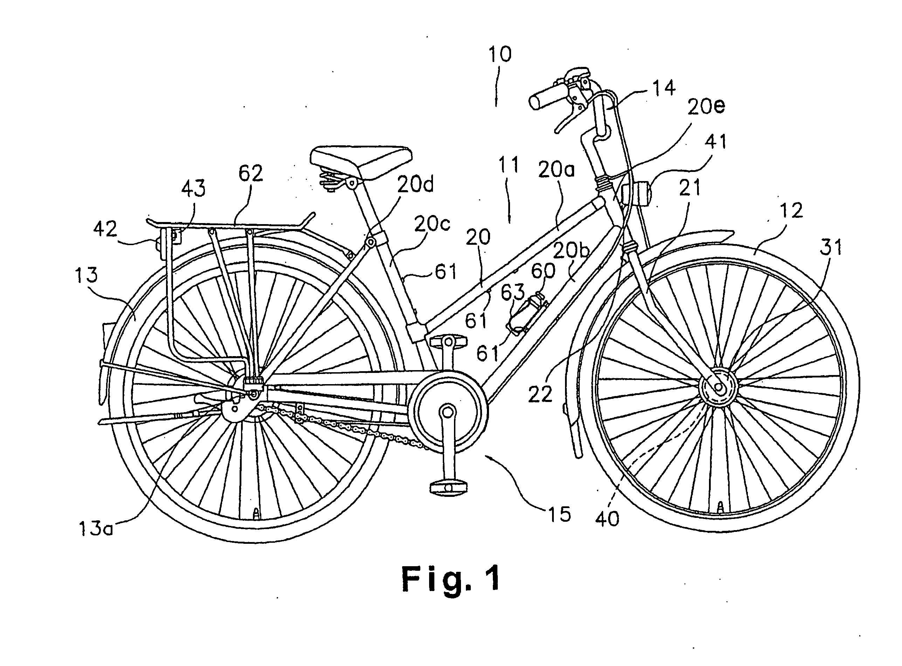

Referring initially to Figure 1, a bicycle 10 is illustrated in accordance with a first embodiment of the present invention. The bicycle 10 includes a frame 11 having a staggered configuration, a pair (front and rear) of wheels 12 and 13, a handlebar unit 14, and a drive unit 15. The drive unit 15 includes cranks, a chain and sprockets.

The frame 11 has a frame body 20 and a front fork 21 that is movably mounted to the front of the frame body 20 such that it can revolve around an angled axis. The front wheel 12 includes a hub 31 that is mounted to the distal end (lower end) of the front fork 21. A hub dynamo 40 is mounted to the interior of the hub 31. The rear wheel 13 is mounted to the rear of the frame 11 by a hub shaft 13a.

The frame body 20 includes an upper tube 20a, a lower tube 20b, a seat tube 20c, a back fork 20d and a head tube 20e. Component attaching parts 61 called braze-ons are disposed on the upper and lower tubes 20a and 20b and on the seat tube 20c of the frame body 20. The component attaching parts 61 are used for mounting a mounting member 63 that holds a bicycle pump or a beverage bottle 60. The component attaching parts 61 each comprise a pair of welded bosses with screw holes formed therein.

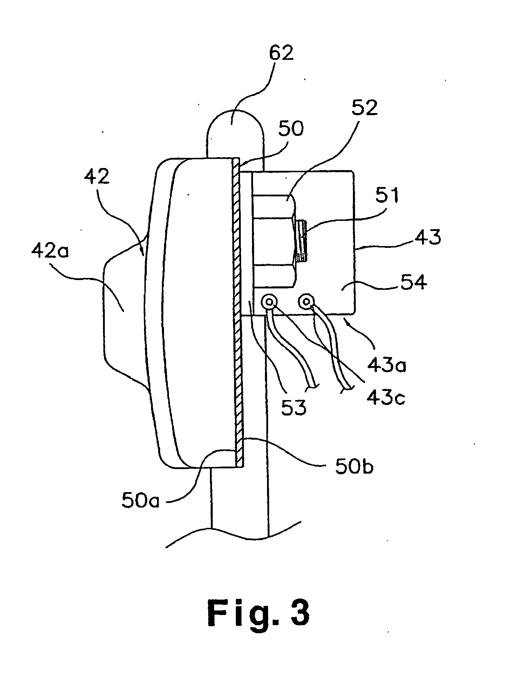

Referring now to Figures 1-3, a rack 62 is mounted to the rear of the frame body 20. The rack 62 is supported by the back fork 20d and the hub shaft 13a of the rear wheel 13. A taillight 42 and a lamp protection apparatus 43 are mounted to the rear end of the rack 62 using bolts 51 and nuts 52. A lamp stay 22 is disposed on the head tube 20e of the frame body 20. A headlight 41 is mounted to the lamp stay 22.

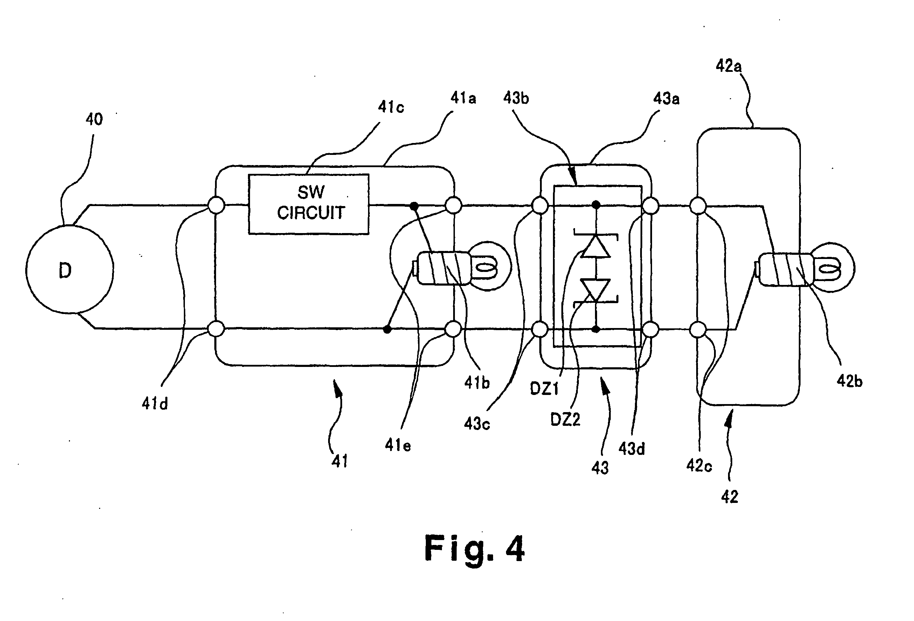

Referring now to Figures 1 and 4, the headlight 41 has a lamp housing 41 a mounted to the lamp stay 22, an electric bulb 41b housed in the lamp housing 41 a, a switch (SW) circuit 41 c, an input terminal 41d that connects to the hub dynamo 40 and an output terminal 41e that outputs the electric power from the hub dynamo 40 to external devices such as the taillight 42. The switch circuit 41c switches the electric bulb 41b ON and OFF in response to the amount of ambient light. The lamp housing 41 a includes a clear lens that faces the electric bulb 41b and a reflective plate disposed behind the electric bulb 41b. The terminals 41d and 41 e are disposed on the outside of the lamp housing 41 in an exposed fashion. In addition, while the terminals 41d, 41 e are disposed as pairs in Figure 4, it will be apparent to one of skill in the art that a construction can be adopted in which one terminal comes into contact with the frame 11. In this case, the terminals 41 d and 41 e can be in the form of one terminal.

The taillight 42 has a lamp housing 42a, an electric bulb 42b housed in the lamp housing 42a and the input terminals 42c. The input terminals 42c are used to input the electric power output from the hub dynamo 40. It will be apparent to one of skill in the art that these input terminals 42c can be one terminal directly connected to a taillight mounting plate 50, which is in turn electrically connected to the frame 11.

The illumination devices as a headlight 41 and a taillight 42 are used as one example. One or more of other types of illumination devices can be used so long as they are mounted to the bicycle 10 and illuminated by electric power from the dynamo 40.

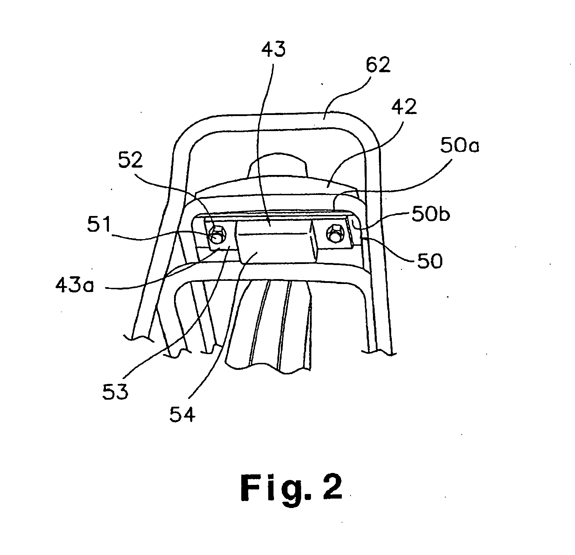

Referring now to Figures 2-4, the taillight mounting plate 50 that serves as a component attaching part for mounting the taillight 42 is welded to the rack 62. The taillight mounting plate 50 includes a rear surface 50a and a front surface 50b. The taillight 42 is mounted to the rear surface 50a of the taillight mounting plate 50. The lamp protection apparatus 43, according to one embodiment of the present invention, is mounted to the front surface 50b of the taillight mounting plate 50 using the bolts 51 and nuts 52.

The lamp protection apparatus 43 includes a casing 43a, an overvoltage protection circuit 43b housed in the casing 43a, a pair of input terminals 43c and a pair of output terminals 43d. The casing 43a has a plate-like mounting part 53 and a case main unit 54. The plate like mounting part 53 is mounted to the front surface 50b of the taillight mounting plate 50. The case main unit 54 is formed so as to cover the mounting part 53. The mounting part 53 is secured to the taillight mounting plate 50 by the bolts 51 and the nuts 52. Thus, the bicycle mounting part 53 of the casing 43a is configured as a bicycle lamp housing support of the taillight 42.

The casing 43a preferably uses a configuration and materials that are effective in promoting heat dissipation. Consequently, damage to the overvoltage protection circuit 43b due to heat buildup can be prevented through the use of a heat-dissipating design and suitable materials for the casing 43a. Furthermore, mounting strength can be easily maintained even if heat radiating fins or the like are disposed on the circuit or the casing 43a.

Because the lamp protection apparatus 43 is separate from the headlight 41 and the switch (SW) circuit 41c, the lamp protection apparatus 43 can be used with an existing illumination device that lacks a protection apparatus. Thus, the lamp protection apparatus 43 can be used to protect an existing illumination device from dynamo overvoltage by using the lamp protection apparatus 43 between the existing illumination device and an existing dynamo.

The input terminals 43c for the taillight 42 are connected in parallel with the output terminals 41e of the headlight 41. The output terminals 43d are also connected in parallel with the input terminals 43c for the taillight 42. The output terminals 43d are disposed on the exterior of the casing 43a. While these input terminals 43c and output terminals 43d are disposed in pairs, it will be apparent to one of skill in the art that one terminal may be connected directly to the taillight mounting plate 50, which is electrically connected to the frame 11.

As shown in Figure 4, the overvoltage protection circuit 43b is a bidirectional voltage clamping circuit comprising two Zener diodes DZ1 and DZ2. The dynamo 40 outputs positive voltage to the positive terminal and the diode DZ1 fulfills the basic voltage clamping function of a Zener diode. The diode DZ2 functions as a normal diode and carries out rectification.

In the overvoltage protection circuit 43b shown in Figure 4, where the Zener voltage from the diode DZ1 is deemed $Vzl$, the forward voltage from the diode DZ2 is deemed $Vf2$, the Zener voltage from the diode DZ2 is deemed $Vz2$, and the forward voltage from the diode DZ1 is deemed $Vf1$, the voltage $Vc1$ that clamps or holds the dynamo voltage is expressed by the following equation (1):

$$Vc1 = Vz1 + Vf2 \qquad\qquad (1)$$

Where positive voltage is to be output from the dynamo 40 to the negative terminal, the voltage $Vc2$ that clamps or holds the dynamo voltage is expressed by the following equation (2):

$$Vc2 = Vz2 + Vf1 \qquad\qquad (2)$$

The overvoltage protection circuit 43b that uses these two Zener diodes DZ1 and DZ2 has the advantage of a small number of components. Furthermore, the overvoltage protection circuit 43b prevents deterioration due to heat generation, particularly heat generation from the Zener diodes DZ1 and DZ2. This heat generation will be described in more detail below.

Where the clamping or holding voltages $Vc1$ and $Vc2$ are to be set at around 10V, the semiconductor junction temperature $Tj$ prior to voltage clamping is set to 25°C. The current flowing to the diodes DZ1 and DZ2 during clamping is set to be constant. When thermal equilibrium is reached after clamping, the semiconductor junction temperature $Tj$ is set to 100°C. Furthermore, if $Vz1$ is 9.1 and $Vz2$ is 0.9, the following is true at the instant of voltage clamping based on the equation (1):

$$Vc1 = 9.1 + 0.9 = 10(V)$$

However, if the temperature coefficient $\alpha T$ is 5 mV/°C, $Vc1$ is properly expressed as follows after thermal equilibrium is reached:

$$Vc1 = 9.1 + (\alpha T /1000) \times (100 - 25) + 0.9 = 10.375(V)$$

Because the overvoltage protection circuit 43b is housed in a dedicated casing 43 a, it prevents deterioration from heat generation resulting from the headlight 41 or taillight 42 burning out. Damage to the overvoltage protection circuit 43b due to heat buildup can be prevented by forming the casing 43a using a configuration and materials that are best suited for heat dissipation.

For example, a highly heat-conductive material such as an aluminum alloy may be used for the casing 43a to efficiently dissipate generated heat. The casing 43a may also be made of synthetic resin and have a large cooling space. Furthermore, heat radiating fins or the like can be disposed on the overvoltage protection circuit 43b or the casing 43 a while maintaining mounting strength.

SECOND EMBODIMENT

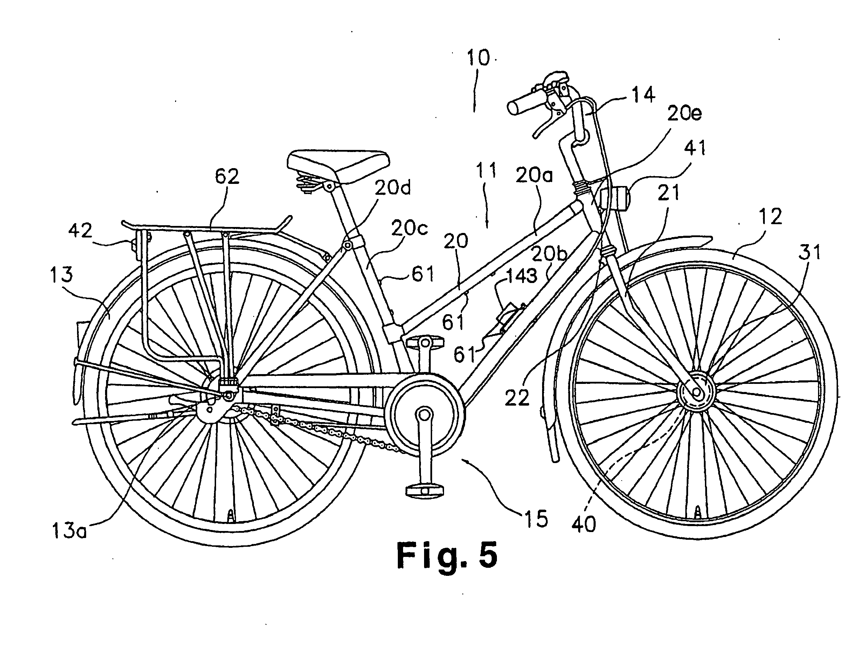

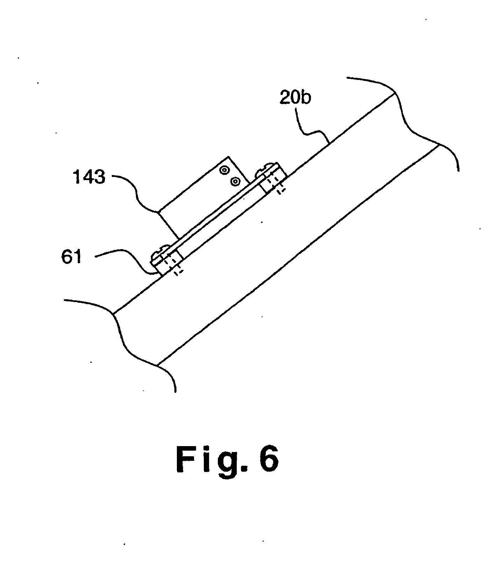

Referring now to Figures 5 and 6, a bicycle lamp protection apparatus 143 in accordance with a second embodiment will now be explained. The circuitry of the bicycle lamp protection apparatus 143 is identical to the lamp protection apparatus 43. Rather the only difference is the casing of the bicycle lamp protection apparatus 143, which is designed to be mounted on the component attaching part 61 of the bicycle 10. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

In the above embodiment, the lamp protection apparatus 43 was mounted to the taillight mounting plate 50, but the lamp protection apparatus 143 can instead be mounted to the component attaching part 61 as seen in Figures 5 and 6 or a mounting part for a fender or a lamp stay 22. Thus, the lamp protection apparatus 43 is a separate component from the lamps 41 and 42 with the lamp protection apparatus 43 being electrically connected to the lamps 41 and 42 and the hub dynamo 40.

THIRD EMBODIMENT

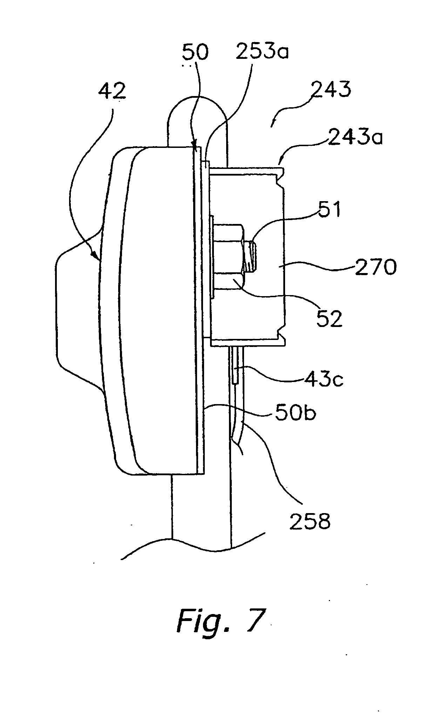

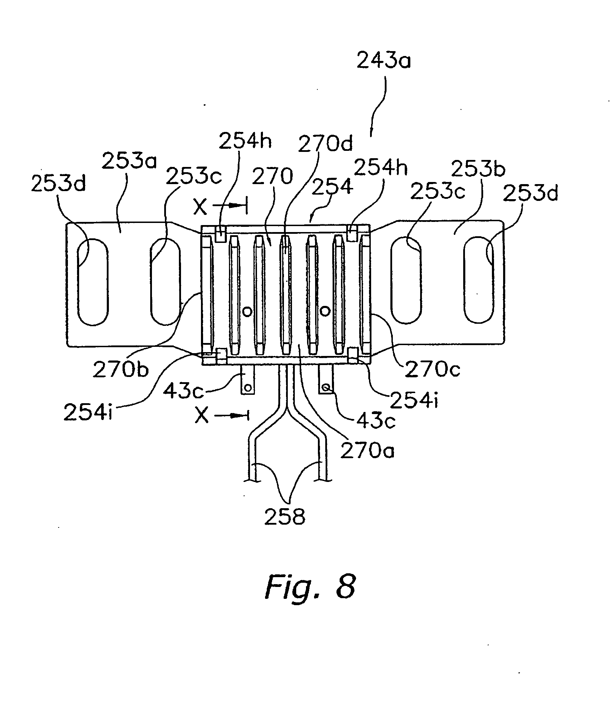

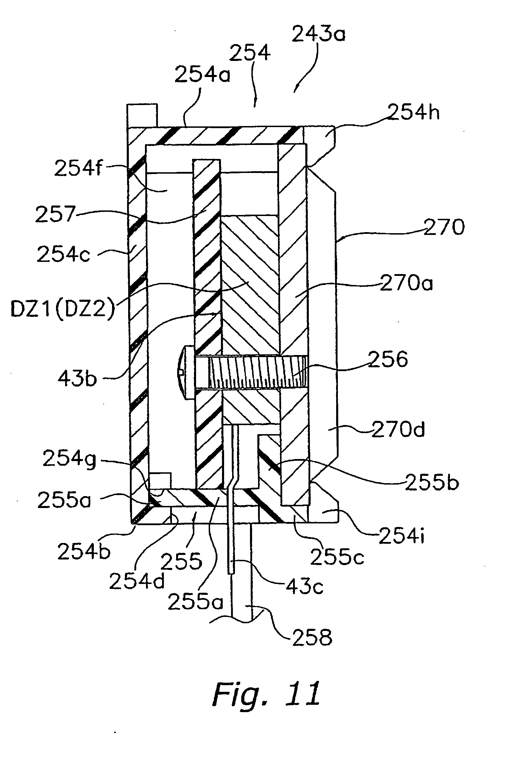

As shown in Figures 7 to 12, a bicycle lamp protection apparatus 243 in accordance with a third embodiment will now be explained. The circuitry of the bicycle lamp protection apparatus 243 is identical to the lamp protection apparatus 43. Rather the only difference is a different casing 243 a that is provide for the bicycle lamp protection apparatus 243. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

The casing 243a in accordance with the third embodiment has a cooling fin unit 270 that serves specifically as a cooling structure. This cooling structure can be added to both of the first and second embodiments as needed and/or desired. The casing 243a includes a left-right pair of plate-like mounting parts 253a and 253b that are mounted to the front surface 50b of the taillight mounting plate 50. The cooling fin unit 270 is made of an aluminum alloy and formed integrally with a pair of plate-like mounting parts 253a and 253b as a one-piece, unitary member. The casing 243a also includes a case main unit 254 that is made of a synthetic resin. The case main unit 254 is configured to hook onto the cooling fin unit 270 and serves to house the overvoltage protection circuit 43b as discussed above with respect to the first embodiment.

Each of the plate-like mounting parts 253a and 253b is provided with a pair of slit-like taillight mounting holes 253c and 253d that are arranged with a space therebetween such that one of the slit-like taillight mounting holes 253c and 253d is positioned closer to the inside and the other is positioned closer to the outside. The bolts 51 for mounting the taillight 42 are passed through either the two taillight mounting holes 253c or the two taillight mounting holes 253d and secured with the nuts 52 such that the lamp protection apparatus 243 is fastened to the front surface 50b of the taillight mounting plate 50 similar to the first embodiment. The plate-like mounting parts 253a and 253b have inside end portions that slope downward and connect to the cooling fin unit 270. The cooling fin unit 270 is generally U-shaped in a top plan view, and has a plate-like front section 270a and a pair of side sections 270b and 270c that extend toward the plate-like mounting parts 253a and 253b at right angles from both ends of the front section 270a. The side sections 270b and 270c have tip edges that connect to the inside edges of the sloped portions of the plate-like mounting parts 253a and 253b. Several forwardly protruding fins 270d (seven in this embodiment) are arranged on the outside surface of the front section 270a of the cooling fin unit 270 such that their lengthwise dimensions are oriented vertically and they are spaced horizontally apart from one another. The fins 270d serve to increase the surface area that is in contact with the outside air and thereby increase the cooling efficiency.

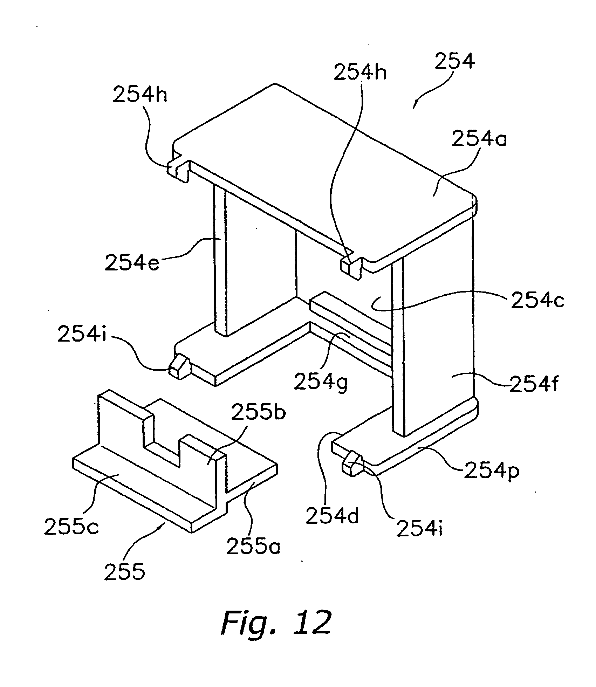

As seen in Figure 12, the case main unit 254 is generally C-shaped in a side elevational view. The case main unit 254 has an upper plate 254a, a lower plate 254b, a back plate 254c, and a left-right pair of side plates 254e and 254f. The lower plate 254b faces the upper plate 254a. The back plate 254c couples the upper plate 254a, the lower plate 254b and the side plates 254e and 254f together. An opening 254d is provided in the lower plate 254b for passing wires and the like therethrough. The opening 254d is covered with a lid member 255. The case main unit 254 further includes pairs of holding claws 254h and 254i configured to hook onto the front section 270a of the cooling fin unit 270 in an elastic manner and a mounting groove 254g. The holding claws 254h and 254i are provided on rear end faces of the upper plate 254a and the lower plate 254b. The case main unit 254 is secured to the cooling fin unit 270 with the pair of holding claws 254h, 254i. An overvoltage protection circuit 43b having the same constituent features as in the first embodiment is housed inside the case main unit 254. More specifically, the overvoltage protection circuit 43b is mounted to the cooling fin unit 270 together with a circuit board 257 inside the case main unit 254 using two mounting bolts 256 that are installed in such a manner that the diodes DZ1 and DZ2 are put into close physical contact with a back surface of the front section 270a of the cooling fin unit 270.

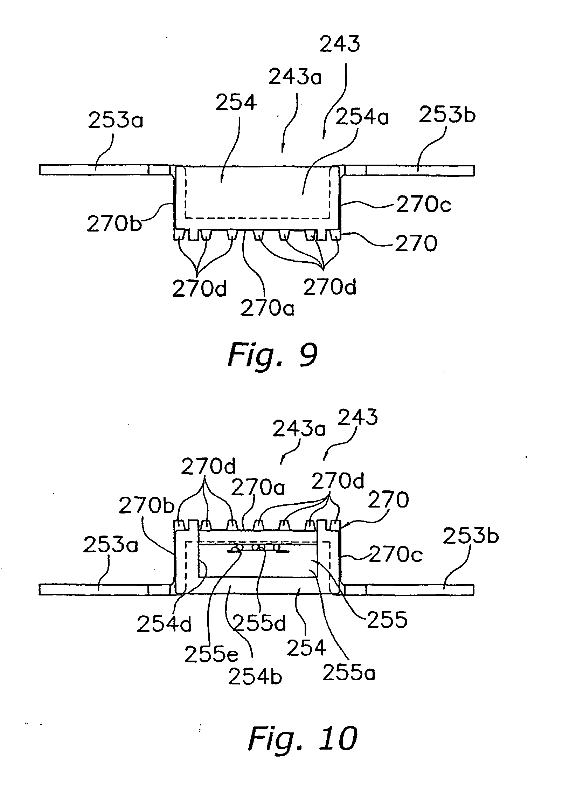

The lid member 255 is made of a synthetic resin and includes a first lid section 255a. A tip end of the first lid section 225a is inserted into the mounting groove 254g formed in the back plate 254c of the case main unit 254. The lid member 255 further includes a vertical plate section 255b and a second lid section 255c. The vertical plate section 255b extends upward from the first lid section 255a and contacts the back surface of the front section 270a of the cooling fin unit 270. The second lid section 255c extends forward from the bottom edge of the vertical plate section 255b. The first lid section 255a is provided with holes 255d for passing electrical wires 258 therethrough and slits 255e for passing the input terminals 43c, as illustrated in Figure 10.

The electrical wires 258 are connected to the output terminals 43d that are drawn out of the casing 243a so that they can be connected to the input terminals 42c of the taillight 42 in the same manner as in the first embodiment. The input terminals 43c that are connected in parallel with the output terminals 41e of the headlight 41 are passed through the slits 255e so that they are exposed on the outside of the casing 43. Although in this embodiment the input terminals 43c and the output terminals 43d are both provided in pairs, it will be apparent to one skilled in the art that one terminal from each pair can be replaced with a direct connection to the taillight mounting plate 50, which is in turn electrically connected to the frame 11.

Since the lamp protection apparatus 243 is provided with the cooling fin unit 270, the cooling capacity is increased because the cooling fins 270d increase the surface area from which heat is emitted. As a result, the overvoltage protection circuit 43b can be better protected from damage caused by heat. Additionally, since the cooling fin unit 270 is formed integrally with the plate-like mounting parts 253a and 253b, the cooling capacity is increased even more because heat is transferred to the plate-like mounting parts 253a and 253b as well. Furthermore, since the diodes DZ1 and DZ2 are mounted so as to be in close physical contact with the back surface of the cooling fin unit 270, heat can be transferred more efficiently to the cooling fins 270d.

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least $\pm$ 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

**Claims**

1. A bicycle lighting arrangement comprising:

a dynamo (40) configured to be powered by a rotating part of a bicycle (10);

at least two bicycle lamps (41, 42) electrically coupled to the dynamo (40);

a casing (43a, 143a, 243a) having a bicycle mounting part (53, 153, 253) configured to be mounted to a bicycle (10);

a plurality of cooling fins (270d) that protrude from a surface of the casing (43a, 143a, 243a), wherein the casing (243a) comprises a case main unit (254) and a cooling fin unit (270) having the cooling fins (270d) arranged on an outside surface of the cooling fin unit (270), and the case main unit (254) is secured to the cooling fin unit (270); and

an overvoltage protection circuit (43b) housed in the casing (43a, 143a, 243a), and electrically connected to the bicycle lamps (41, 42), the overvoltage protection circuit (43b) being configured to prevent overvoltage from being supplied from the dynamo (40) to the bicycle lamps (41, 42),

**characterized in that** the cooling fin unit (270) is formed integrally with the bicycle mounting part (253) as a one-piece unitary member.

2. The bicycle lighting arrangement according to claim 1, wherein
the case main unit (254) is configured to hook onto the cooling fin unit (270).

3. The bicycle lighting arrangement according to claim 1 or 2, wherein
the bicycle lamps (41, 42) include at least a headlight (41) and a taillight (42) that are illuminated by electric power from the dynamo (40), with the taillight (42) being coupled to the bicycle mounting part (53, 153, 253).

4. The bicycle lighting arrangement according claim 3, wherein
the taillight (42) is electrically connected to the dynamo (40) in parallel with the headlight (41).

5. The bicycle lighting arrangement according to claim 4, wherein
the overvoltage protection circuit (43b) is electrically connected between the headlight (41) and the taillight (42).

6. The bicycle lighting arrangement according to claim 1 or 2, wherein
the bicycle mounting part (53, 153, 253) is configured to be mounted to a component attaching part (61) on the bicycle (10).

7. The bicycle lighting arrangement according to claim 1 or 2, wherein
the bicycle mounting part (53, 153, 253) is configured to be mounted to a component attaching part (61) having holes used for mounting.

8. The bicycle lighting arrangement according to claim 1 or 2, wherein
the bicycle mounting part (53, 153, 253) is configured to be mounted to a component attaching part (61) having a pair of screw holes disposed on a bicycle frame (11) to enable mounting of a bottle mounting member (61).

9. The bicycle lighting arrangement according to claim 3, wherein
the overvoltage protection circuit (43b) has a first terminal (43c) connected to the headlight (41), a second terminal (43d) connected to the taillight (42) and a diode (DZ1, DZ2) disposed between the first and second terminals (43c, 43d) and electrically connected to both of the first and second terminals.

10. The bicycle lighting arrangement according to one of the preceding claims, wherein
the overvoltage protection circuit (43b) includes a wire (258) connecting the second terminal to the taillight (42).

11. The bicycle lighting arrangement according to claim 10, wherein
the cooling fins (270d) are made of an aluminium alloy.

12. The bicycle lighting arrangement according to claim 1 or 2, wherein
the bicycle mounting part (53, 153, 253) of the casing (43 a, 143a, 243a) is configured as a bicycle lamp housing support (22).

**Patentansprüche**

1. Fahrradbeleuchtungsanordnung, aufweisend:

    einen Dynamo (40), der konfiguriert ist, um durch ein rotierendes Teil eines Fahrrades (10) angetrieben zu werden;
    mindestens zwei Fahrradlampen (41, 42), die mit dem Dynamo (40) elektrisch verbunden sind;
    ein Gehäuse (43a, 143a, 243a), das ein Fahrradbefestigungsteil (53, 153, 253) aufweist, das konfiguriert ist, um an einem Fahrrad (10) montiert zu werden;
    einen Mehrzahl von Kühlfinnen (270d), die aus einer Fläche des Gehäuses (43a, 143a, 243a) hervorstehen, wobei das Gehäuse (243a) eine Gehäusehaupteinheit (254) und eine Kühlfinneneinheit (270) aufweist, wobei die Kühlfinnen (270d) auf einer Außenseitenfläche der Kühlfinneneinheit (270) angeordnet sind und die Gehäusehaupteinheit (254) an der Kühlfinneneinheit (270) befestigt ist; und
    eine Überspannungsschutzeinheit (43b), die im Gehäuse (43a, 143a, 243a) untergebracht ist und mit den Fahrradlampen (41, 42) elektrisch verbunden ist, wobei die Überspannungsschutzschaltung (43b) konfiguriert ist, um zu verhindern, dass eine Überspannung vom Dynamo (40) zu den Fahrradlampen (41, 42) zugeführt wird,

    **dadurch gekennzeichnet, dass** die Kühlfinneneinheit (270) integral mit dem Fahrradbefestigungsteil (253) als einstückiges unitäres Element ausgebildet ist.

2. Fahrradbeleuchtungsanordnung nach Anspruch 1, wobei die Gehäusehaupteinheit (254) konfiguriert ist, um an der Kühlfinneneinheit (270) festgehakt zu werden.

3. Fahrradbeleuchtungsanordnung nach Anspruch 1 oder 2, wobei die Fahrradlampen (41, 42) mindestens ein Vorderlicht (41) und ein Rücklicht (42) beinhalten, die durch elektrischen Strom vom Dynamo (40) beleuchtet werden, wobei das Rücklicht (42) mit dem Fahrradbefestigungsteil (53, 153, 253) verbunden ist.

4. Fahrradbeleuchtungsanordnung nach Anspruch 3, wobei das Rücklicht (42) elektrisch parallel zum Vorderlicht (41) an den Dynamo (40) angeschlossen ist.

5. Fahrradbeleuchtungsanordnung nach Anspruch 4, wobei die Überspannungsschutzschaltung (43b) zwischen dem Vorderlicht (41) und dem Rücklicht (42) elektrisch angeschlossen ist.

6. Fahrradbeleuchtungsanordnung nach Anspruch 1 oder 2, wobei das Fahrradbefestigungsteil (53, 153, 253) konfiguriert ist, um an einem Bauteilbefestigungsteil (61) am Fahrrad (10) montiert zu werden.

7. Fahrradbeleuchtungsanordnung nach Anspruch 1 oder 2, wobei das Fahrradbefestigungsteil (53, 153, 253) konfiguriert ist, um an einem Bauteilbefestigungsteil (61) montiert zu werden, das zum Befestigen verwendete Löcher aufweist.

8. Fahrradbeleuchtungsanordnung nach Anspruch 1 oder 2, wobei das Fahrradbefestigungsteil (53, 153, 253) konfiguriert ist, um an einem Bauteilbefestigungsteil (61) montiert zu werden, das ein Paar von Schraubenlöchern aufweist, die an einem Fahrradrahmen (11) angeordnet sind, um ein Montieren eines Flaschenbefestigungselementes (61) zu ermöglichen.

9. Fahrradbeleuchtungsanordnung nach Anspruch 3, wobei die Überspannungsschutzschaltung (43b) einen ersten Anschluss (43c), der an das Vorderlicht (41) angeschlossen ist, einen zweiten Anschluss (43d), der an das Rücklicht (42) angeschlossen ist, und eine Diode (DZ1, DZ2) aufweist, die zwischen den ersten und zweiten Anschlüssen (43c, 43d) angeordnet ist und elektrisch sowohl an den ersten als auch den zweiten Anschluss angeschlossen ist.

10. Fahrradbeleuchtungsanordnung nach einem der vorhergehenden Ansprüche, wobei die Überspannungsschutzschaltung (43b) einen Draht (258) beinhaltet, der den zweiten Anschluss an das Rücklicht (42) anschließt.

11. Fahrradbeleuchtungsanordnung nach Anspruch 10, wobei die Kühlfinnen (270d) aus einer Aluminiumlegierung bestehen.

12. Fahrradbeleuchtungsanordnung nach Anspruch 1 oder 2, wobei das Fahrradbefestigungsteil (53, 153, 253) des Gehäuses (43a, 143a, 243a) als Fahrradlampen-Gehäuseträger (22) konfiguriert ist.

**Revendications**

1.  Agencement d'éclairage de bicyclette comprenant :

    une dynamo (40) configurée pour être entraînée par une partie rotative d'une bicyclette (10) ;
    au moins deux lampes de bicyclette (41, 42) électriquement couplées à la dynamo (40) ;
    un boîtier (43a, 143a, 243a) ayant une partie de montage sur bicyclette (53, 153, 253) configuré pour être monté sur une bicyclette (10) ;
    une pluralité d'ailettes de refroidissement (270d) qui font saillie à partir d'une surface du boîtier (43a, 143a, 243a), où le boîtier (243a) comprend une unité principale de boîtier (254) et une unité d'ailettes de refroidissement (270) ayant les ailettes de refroidissement (270d) agencées sur une surface extérieure de l'unité d'ailettes de refroidissement (270), et l'unité principale de boîtier (254) est fixée à l'unité d'ailettes de refroidissement (270) ; et
    un circuit de protection de surtension (43b) logé dans le boîtier (43a, 143a, 243a), et électriquement connecté aux lampes de bicyclette (41, 42), le circuit de protection de surtension (43b) étant configuré pour empêcher une surtension d'être délivrée de la dynamo (40) aux lampes de bicyclette (41, 42),

    **caractérisé en ce que** l'unité d'ailettes de refroidissement (270) est formée solidairement avec la partie de montage sur bicyclette (253) sous la forme d'un organe unitaire d'un seul tenant.

2.  Agencement d'éclairage de bicyclette selon la revendication 1, dans lequel l'unité principale de boîtier (254) est configurée pour s'accrocher sur l'unité d'ailettes de refroidissement (270).

3.  Agencement d'éclairage de bicyclette selon la revendication 1 ou 2, dans lequel les lampes de bicyclette (41, 42) incluent au moins un feu avant (41) et un feu arrière (42) qui sont éclairés par de l'énergie électrique provenant de la dynamo (40), le feu arrière (42) étant couplé à la partie de montage sur bicyclette (53, 153, 253).

4.  Agencement d'éclairage de bicyclette selon la revendication 3, dans lequel le feu arrière (42) est électriquement connecté à la dynamo (40) en parallèle avec le feu avant (41).

5.  Agencement d'éclairage de bicyclette selon la revendication 4, dans lequel le circuit de protection de surtension (43b) est électriquement connecté entre le feu avant (41) et le feu arrière (42).

6.  Agencement d'éclairage de bicyclette selon la revendication 1 ou 2, dans lequel la partie de montage sur bicyclette (53, 153, 253) est configurée pour être montée sur une partie de fixation de composant (61) sur la bicyclette (10).

7.  Agencement d'éclairage de bicyclette selon la revendication 1 ou 2, dans lequel la partie de montage sur bicyclette (53, 153, 253) est configurée pour être montée sur une partie de fixation de composant (61) comportant des trous utilisés pour le montage.

8.  Agencement d'éclairage de bicyclette selon la revendication 1 ou 2, dans lequel la partie de montage sur bicyclette (53, 153, 253) est configurée pour être montée sur une partie de fixation de composant (61) ayant une paire de trous de vis disposés sur un cadre de bicyclette (11) pour permettre le montage d'un organe de montage de bouteille (61).

9.  Agencement d'éclairage de bicyclette selon la revendication 3, dans lequel le circuit de protection de surtension (43b) comporte une première borne (43c) connectée au feu avant (41), une seconde borne (43d) connectée au feu arrière (42) et une diode (DZ1, DZ2) disposée entre les première et seconde bornes (43c, 43d) et électriquement connectée aux première et seconde bornes.

10. Agencement d'éclairage de bicyclette selon l'une des revendications précédentes, dans lequel le circuit de protection de surtension (43b) inclut un fil (258) connectant la seconde borne au feu arrière (42).

11. Agencement d'éclairage de bicyclette selon la revendication 10, dans lequel les ailettes de refroidissement (270d) sont constituées d'un alliage d'aluminium.

12. Agencement d'éclairage de bicyclette selon la revendication 1 ou 2, dans lequel la partie de montage sur bicyclette (53, 153, 253) du boîtier (43a, 143a, 243a) est configurée comme un support de logement de lampe de bicyclette (22).

**Fig. 1**

EP 1 600 366 B1

# Fig. 2

**Fig. 3**

Fig. 4

Fig. 5

# Fig. 6

Fig. 7

Fig. 8

253a 254 243a 243 254a 253b

270c

270b 270

270d 270d
270a

*Fig. 9*

243a 243

270d 270a 270d 270

270b 270c

253a 253b

255

254d 255d 255
255e 254 255a
254b

*Fig. 10*

*Fig. 11*

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 200310141918 A1

### Non-patent literature cited in the description

• Dealer Sales Manual. Shimano Bicycle Components, September 1996